# FASCICULE DE BREVET EUROPEEN

(11) **EP 0 931 819 B1**
(45) Date de publication et mention de la délivrance du brevet: **09.07.2003**
(21) Numéro de dépôt: 98403276.3
(22) Date de dépôt: 23.12.1998
(51) Int. Cl.: C09D 163/00, C08G 59/50

(54) **Utilisation de compositions de polymères pour le revêtement de surfaces et revêtement de surfaces comprenant ces compositions**
Verwendung von Polymerzusammensetzungen zur Oberflächenbeschichtung und damit beschichtete Oberfläche
Use of a polymer composition for surface coating and surfaces coated therewith

(30) Priorité: 22.01.1998 FR 9800758
(43) Date de publication de la demande: 28.07.1999
(73) Titulaire: Institut Francais du Petrole, 92852 Rueil-Malmaison Cedex (FR)
(72) Inventeur: Camberlin, Yves, 69300 Caluire (FR); Grenier, Jacky, 38141 Vignieu (FR); Poncet, Stéphane, 69110 St. Foy Lyon (FR); Bonnet, Anthony, 38510 Passins (FR); Pascault, Jean-Pierre, 69100 Villeurbanne (FR); Sautereau, Henri, 69120 Vaulx-en-Velin (FR)

(56) Documents cités:
- EP-A- 0 292 166
- EP-A- 0 833 036
- US-A- 4 304 889
- PATENT ABSTRACTS OF JAPAN vol. 006, no. 180 (C-125), 14 septembre 1982 & JP 57 096055 A (MATSUSHITA ELECTRIC IND CO LTD), 15 juin 1982

## Description

Dans le cadre d'une étude sur les revêtements de surfaces, la demanderesse s'est intéressée à des compositions de polymères. Suite à ce travail des compositions particulièrement intéressantes pour les revêtements de surfaces ont été retenues, ces compositions contiennent au moins un polymère thermoplastique le plus souvent amorphe ou faiblement cristallin et au moins une résine époxyde modifiée par au moins une polyamine aromatique.

La présente invention concerne l'utilisation de ces compositions pour le revêtement de surfaces métalliques ou autres par exemple pour des récipients ou des canalisations. Ces compositions sont particulièrement bien adaptées à la protection de surfaces en particulier de surfaces métalliques. On utilisera en particulier ces compositions pour le revêtement des conduites ou canalisations et des pipelines, notamment des conduites ou canalisations métalliques et des pipelines en acier.

Les pipelines sont des tubes métalliques, souvent en acier, essentiellement utilisés dans les forages et pour transporter le pétrole brut ou le gaz naturel mais on peut aussi envisager de transporter toutes sortes de fluides au moyen de ces pipelines. Le pipeline subit une corrosion sur sa surface interne par le fluide transporté, lorsque ce fluide transporté est le pétrole, les composés soufrés contenus dans le pétrole sont les principaux responsables de la corrosion. Lorsque le forage est effectué en mer (forage "off-shore"), le pipeline subit en plus sur sa surface externe une corrosion par l'eau de mer.

Le principal problème rencontré quand on veut déposer un polymère sur une surface métallique par exemple sur la surface interne et/ou externe d'un pipeline, par exemple en acier, est la tenue du polymère lorsqu'il est soumis à des contraintes d'ordre thermique. En effet, même si on refroidit le pétrole avant de le transporter, le pipeline est souvent porté à une température d'environ 50 à 200 °C par contact avec le pétrole chaud. Certains polymères, par exemple le polypropylène, ont tendance à se déformer et à ne plus adhérer à l'acier dès qu'on le porte à une température supérieure à 130 °C. D'autres polymères, comme les polyétherimides ou les polysulfones, adhèrent à hautes températures mais leur température de mise en oeuvre (du dépôt sur l'acier) est alors plus élévée, environ 360 °C. Or, à partir d'une température d'environ 250 °C, les métaux et notamment l'acier - utilisé le plus fréquemment pour la fabrication des pipelines - peuvent présenter des modifications de phases. En outre, certaines de leurs propriétés mécaniques et physiques peuvent être modifiées.

D'autre part, une bonne adhérence du polymère à plus haute température permet de transporter le pétrole sans qu'il soit nécessaire de le refroidir ou tout au moins en le soumettant à un refroidissement moins important. Or à une température relativement élevée, le pétrole est moins visqueux, donc plus facile à transporter.

L'utilisation de compositions de polymères selon la présente invention permet de s'affranchir des inconvénients précités ; notamment cette utilisation permet l'obtention de pipelines avec un revêtement qui présente une bonne adhérence, une bonne rigidité, une bonne tenue à l'eau de mer. En outre, les compositions de polymères utilisées présentent des propriétés qui sont peu altérées lorsque ces compositions sont soumises au viellissement.

Les compositions de polymères utilisées contiennent au moins un polymère thermoplastique ayant le plus souvent une température de transition vitreuse élevée et étant de préférence amorphe ou faiblement cristallin, le plus souvent choisi dans le groupe formé par les polysulfones, les polyétherimides et les polyphénylèneéthers et au moins une résine époxyde modifiée par au moins une polyamine aromatique comportant dans sa molécule au moins 2 groupes amino primaires et contenant au moins un substituant alcanoyle ayant de 1 à 12 atomes de carbone situé en alpha de l'un des groupes amino, la teneur en polymère thermoplastique étant supérieure à 15 % et jusqu'à 98 % en masse par rapport à la masse totale de la composition de polymères et la teneur en résine époxyde modifiée par au moins une polyamine aromatique étant d'environ 2 à 85 % en masse par rapport à la masse totale de la composition de polymères.

Dans la suite de la description, les polyamines encombrées décrites ci-devant seront appelées "polyamines aromatiques".

De préférence les compositions de polymères utilisées contiennent au moins un polymère thermoplastique à une teneur d'environ 30 à 70 % en masse, par rapport à la masse totale de la composition et au moins une résine époxyde modifiée par au moins une polyamine aromatique à une teneur d'environ 30 à 70 % en masse, par rapport à la masse totale de la composition.

Le terme "polysulfone" peut générer une ambiguïté. En effet, le premier polymère d'importance commerciale dont le motif de base contient un groupe sulfone -SO₂- est le polymère commercialisé par la société AMOCO sous l'appelation UDEL. De ce fait, cette polysulfone particulière reçoit souvent l'appelation générique de polysulfone. Au sens de la présente description, le terme "polysulfone" recouvre le sens générique, et il n'a pas uniquement le sens limitatif de la polysulfone de type UDEL.

Les polysulfones utilisées dans ces compositions de polymères sont de préférence des polysulfones aromatiques et, de façon encore plus préférée, les polysulfones de type UDEL, les polyéthersulfones de type polysulfones RADEL A, commercialisées par la société AMOCO, et les polyphénylènesulfones de type polysulfones RADEL R, également commercialisées par la société AMOCO.

Les polyétherimides utilisés dans ces compositions de polymères sont de préférence les polyétherimides de type ULTEM, commercialisés par la société General Electric Plastics.

Les polyphénylèneéthers utilisés dans ces compositions de polymères sont de préférence les polyphénylèneéthers de type PPE 800 commercialisés par la société General Electric Plastics.

Dans les utilisations selon la présente invention, les polymères thermoplastiques peuvent être utilisés seuls, en mélanges ou encore en mélanges avec d'autres polymères comme par exemple des polyéthercétones aromatiques ou des polysulfures de phénylène. Dans les compositions de polymères qui contiennent des polyéthercétones aromatiques, celles-ci sont présentes en une teneur qui représente environ 1 à 50 % en masse par rapport à la masse totale des polymères thermoplastiques. Dans les compositions de polymères qui contiennent des polysulfures de phénylène, ceux-ci sont présents en une teneur qui représente environ 1 à 50 % en masse par rapport à la masse totale des polymères thermoplastiques.

Les résines époxydes modifiées par au moins une polyamine aromatique de préférence encombrée utilisées dans les compositions de polymères sont des résines époxydes formées à partir d'au moins un polyépoxyde contenant dans sa molécule au moins deux groupes époxydes et d'au moins une polyamine aromatique comportant dans sa molécule au moins deux groupes amino primaires, au moins un substituant alcanoyle ayant de 1 à 12 atomes de carbone situé en alpha de l'un des groupes amino, le rapport molaire de l'amine à l'époxyde étant tel que, à chaque groupe amino, il corresponde de 1,6 à 2,6 groupes époxydes.

Les polyamines aromatiques choisies le sont en raison de leur faible réactivité et aussi en raison de leur caractère non toxique.

La résine époxyde peut être choisie dans le groupe formé par les résines commerciales suivantes : la résine diglycidyléther du bisphénol-A ou du bisphénol-F, la résine de bis-phénol formol, la résine phénol-novolaque, les résines cycloaliphatiques, les résines tri- ou tétrafonctionnelles, les résines formées à partir de triglycidyléther-isocyanurate et/ou de triglycidyléther-cyanurate et/ou de triglycidyl-cyanurate et/ou de triglycidyl-isocyanurate ou les mélanges d'au moins deux de ces résines.

Les résines époxydes obtenues à partir de composés époxydés cités dans le brevet US-A-4 921 047 sont également utilisables dans le cadre de la présente invention.

Parmi les polyamines aromatiques utilisées dans les compositions de polymères, on peut considérer une première série d'amines aromatiques comportant un seul noyau aromatique comme par exemple le 3,5-diéthyl-2,4-diaminotoluène, le 3,5-diéthyl-2,6-diaminotoluène et les mélanges de ces deux isomères. On utilise le plus souvent un mélange de ces deux isomères, que l'on dénomme généralement DETDA.

Dans une deuxième série d'amines utilisées, on considère les amines comportant au moins deux noyaux aromatiques, les deux noyaux aromatiques sont généralement reliés l'un à l'autre par un reste hydrocarboné bivalent linéaire ou ramifié comportant de 1 à 18 atomes de carbone. Ces deux noyaux aromatiques sont soit reliés par un groupe alcoyle bivalent, soit reliés l'un à l'autre par un reste hydrocarboné bivalent linéaire ou ramifié ayant de 6 à 18 atomes de carbone et comportant un noyau aromatique.

L'amine peut aussi comporter au moins un substituant choisi dans le groupe formé par le fluor, l'iode, le brome et le chlore. Elle comporte de préférence au moins deux substituants alcanoyles, chacun étant en alpha de part et d'autre d'un groupe amino.

Dans le cas où les deux noyaux aromatiques sont reliés par un reste alcoyle bivalent, ce reste sera de préférence un groupe méthylidène non substitué, ou substitué par au moins un radical choisi parmi les radicaux alcoyles et les radicaux halogénoalcoyles ayant de 1 à 3 atomes de carbone. Par exemple ce reste alcoyle sera choisi dans le groupe formé par le groupe méthylidène, le groupe isopropylidène, les groupes halogénoisopropylidènes, le groupe hexafluoroisopropylidène. Dans ce cas, l'amine est de préférence choisie dans le groupe formé par :
- la 4,4'-méthylène-bis(2,6-diméthylaniline) ou M-DMA ;
- la 4,4'-méthylène-bis(2-isopropyl-6-méthyl-aniline) ou M-MIPA ;
- la 4,4'-méthylène-bis(2,6-diéthylaniline) ou M-DEA ;
- la 4,4'-méthylène-bis(2,6-diisopropylaniline) ou M-DIPA ; et
- la 4,4'-méthylène-bis(3-chloro-2,6-diéthylaniline) ou M-CDEA.

Parmi ces amines, la 4,4'-méthylène-bis(2,6-diéthylaniline) et la 4,4'-méthylène-bis(3-chloro-2,6-diéthylaniline) présentent un intérêt particulier.

Dans le cas où l'amine comporte deux noyaux aromatiques qui sont reliés l'un à l'autre par un reste hydrocarboné bivalent substitué ou non substitué ayant de 6 à 18 atomes de carbone et comportant un noyau aromatique, elle sera de préférence choisie dans le groupe formé par :
- la 4,4'-(phénylène-diisopropyl)-bis(2,6-diméthyl-aniline) ;
- la 4,4'-(phénylène-diisopropyl)-bis(2,6-diéthyl-aniline) ;
- la 4,4'-(phénylène-diisopropyl)-bis(2,6-dipropyl-aniline) ;
- la 4,4'-(phénylène-diisopropyl)-bis(2,6-diisopropyl-aniline) ;
- la 4,4'-(phénylène-diisopropyl)-bis(2,6-diméthyl-3-chloro-aniline) ;
- la 4,4'-(phénylène-diisopropyl)-bis(2,6-diéthyl-3-chloro-aniline) ;
- la 4,4'-(phénylène-diisopropyl)-bis(2,6-dipropyl-3-chloro-aniline) ;
- la 4,4'-(phénylène-diisopropyl)-bis(2,6-diisopropyl-3-chloro-aniline) ;
- la 3,3'-(phénylène-diisopropyl)-bis(2,6-diméthyl-aniline) ;
- la 3,3'-(phénylène-diisopropyl)-bis(2,6-diéthyl-aniline) ;
- la 3,3'-(phénylène-diisopropyl)-bis(2,6-dipropyl-aniline) ;
- la 3,3'-(phénylène-diisopropyl)-bis(2,6-diméthyl-3-chloro-aniline) ;
- la 3,3'-(phénylène-diisopropyl)-bis(2,6-diéthyl-3-chloro-aniline),
- la 3,3'-(phénylène-diisopropyl)-bis(2,6-dipropyl-3-chloro-aniline) ;
- la 3,3'-(phénylène-diisopropyl)-bis(2,6-diisopropyl-aniline) ; et
- la 3,3'-(phénylène-diisopropyl)-bis(2,6-diisopropyl-3-chloro-aniline).

Dans le cadre de la présente invention, les compositions de polymères peuvent aussi contenir des catalyseurs actifs dans la réaction entre les résines époxydes et les polyamines aromatiques encombrées. Les catalyseurs actifs les plus souvent utilisés sont les imidazoles, les amines tertiaires, des complexes à base de bore trifluoré. On peut aussi ajouter des additifs choisis dans le groupe formé par les antioxydants, les pigments, les promoteurs d'adhérence, les stabilisants à la chaleur ainsi que des charges organiques, minérales ou métalliques.

La préparation de ces compositions de polymères est, de préférence, effectuée sans solvant, à l'état fondu à une température d'environ 100 à 250 °C et de préférence d'environ 150 à 200 °C. De préférence, cette préparation est effectuée au moyen d'un mélangeur, comme par exemple une extrudeuse double- vis. Suivant ce mode préféré de préparation, les résines époxydes, les polyamines aromatiques et les additifs éventuels sont introduits dans le mélangeur sous la forme d'un pré-mélange, auquel on ajoute le polymère thermoplastique, on peut aussi introduire isolément chaque réactif dans le mélangeur par des zones d'entrée différentes ou par une seule zone d'entrée. On peut aussi effectuer, dans un premier temps, le mélange des polymères thermoplastiques et des résines époxydes, puis ajouter ensuite la polyamine aromatique. On peut même prévoir d'introduire la polyamine aromatique dans le mélangeur dans une zone proche de la zone de récupération de la composition de polymères.

Une fois le mélange effectué, la composition de polymères est mise en forme, puis, de préférence, soumise à un recuit. Ce recuit consiste en général à porter la composition à une température d'environ 200 à 250 °C par exemple pendant une durée d'environ 10 minutes à 12 heures. Il est de préférence effectué au moyen d'une étuve.

On a ainsi déposé des couches de compositions de polymères sur différents types de canalisations, en particulier sur des pipelines en métal et encore plus particulièrement en acier. Des revêtements internes et externes ont été réalisés. Différentes mises en oeuvre des dépôts ont ainsi été étudiées. Parmi les mises en oeuvre possibles, les dépôts sous forme de poudrage ou sous forme d'extrusion ont été préférés. Les couches de compositions de polymères ainsi réalisées présentent généralement une épaisseur d'environ 10.10⁻⁶m (10 micromètres) à 1.10⁻²m (1 centimètre) et de préférence d'environ 50.10⁻⁶m (50 micromètres) à 5 10⁻³m (5 millimètres).

Des utilisations de compositions de polymères pour le revêtement de surfaces en multi-couches ont aussi été testées. On a ainsi réalisé jusqu'à 5 couches superposées. De préférence, des essais de superposition d'environ 2 à 4 couches ont été réalisés.

Ainsi, une couche de composition de polymères contenant au moins un polymère thermoplastique et au moins une résine époxyde modifiée par au moins une polyamine a été déposée sur un métal, en particulier sur de l'acier ou sur de l'acier revêtu d'un primaire anti-corrosion et/ou d'un promoteur d'adhérence. Des dépôts sur d'autres matériaux, notamment sur d'autres polymères, ont aussi été étudiés.

Des utilisations de compositions de polymères pour le revêtement de surfaces en multi-couches ont aussi été testées, ainsi sur une (ou plusieurs) couche(s) de composition de polymères contenant au moins un polymère thermoplastique et au moins une résine époxyde modifiée par au moins une polyamine, on a déposé une couche de composition de polymères contenant au moins un polymère thermoplastique et au moins une résine époxyde modifiée par au moins une polyamine aromatique, les couches contenant des polymères thermoplastiques identiques ou différents, dans des proportions identiques ou différentes.

Sur une couche de composition de polymères contenant au moins un polymère thermoplastique et au moins une résine époxyde modifiée par au moins une polyamine aromatique, on a aussi déposé des polymères réactifs qui présentent une bonne adhérence avec les couches sur lesquelles ils sont déposés, comme par exemple des polymères présentant une ou plusieurs fonctions réactives, comme, par exemple, les fonctions époxy, alcool, amine, acide, anhydride, thiol ou des polyoléfines présentant des fonctions réactives avec les systèmes époxydes ou des fonctions polaires, ou encore une polyoléfine P1 modifiée contenant au moins un cycle succimide substitué sur l'azote par un groupement réactif, ledit cycle étant supporté soit par la chaîne principale, soit par la chaîne latérale. On peut encore employer le produit résultant de la réaction de cette polyoléfine modifiée sur au moins un polyépoxyde comportant au moins deux groupes époxydes dans sa molécule.

Cette polyoléfine P1 peut être définie comme étant le produit résultant de la réaction d'au moins une polyoléfine sur au moins un composé comportant un cycle maléimide substitué sur l'azote par un groupement réactif de formule -R-(X)ₙ dans laquelle X représente un groupement réactif, n un nombre égal ou supérieur à 1 et R est un reste comportant au moins un atome de carbone. Le plus souvent n est égal à 1 et dans ce cas le composé comportant un cycle maléimide utilisé dans le cadre de la présente invention est représenté par la formule (I) ci-après :

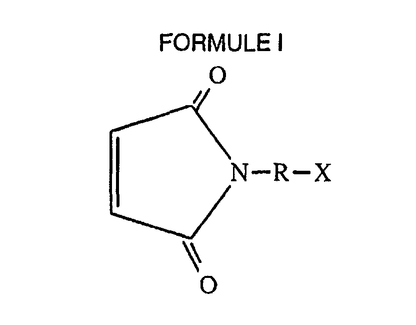

Le groupe réactif -X est habituellement choisi parmi le groupe hydroxyle, un groupe carboxylique, un groupe carboxamide, un groupe halogénure d'acide carboxylique, un groupe thiol, un groupe thio-carboxylique, un groupe amino, un halogène, un groupe époxy et un groupe carboxylique estérifié dont la partie ester comporte un groupe réactif. Dans le cas où plusieurs groupes -X sont présents, ils peuvent être identiques entre eux ou différents.

Le groupe réactif -X est le plus souvent choisi parmi les groupes capables de réagir avec les fonctions époxydes par ouverture du cycle oxiranne. On utilise très souvent des composés comportant un groupe réactif choisi parmi le groupe carboxylique, le groupe carboxamide, un groupe halogénure d'acide et par exemple un groupe chlorure d'acide carboxylique. Le groupe préféré est le groupe carboxylique.

Le groupe -R- est habituellement choisi parmi les groupes hydrocarbonés aliphatiques, saturés ou insaturés, substitués ou non, les groupes aromatiques substitués ou non substitués. On préfère généralement des groupes non substitués et le plus souvent des groupes comportant au moins un noyau aromatique. A titre d'exemple de groupe que l'on trouve très fréquemment, on peut citer les groupes benzéniques reliés en ortho, méta ou para d'une part à l'atome d'azote et d'autre part au groupe réactif -X. On utilise le plus souvent la forme liée en para ou celle liée en méta.

Les polyoléfines utilisées pour former cette couche peuvent être n'importe quelles polyoléfines bien connues des hommes du métier. On utilisera de préférence des polyoléfines obtenues à partir d'au moins un monomère insaturé comportant une ou plusieurs insaturations, le plus souvent choisi dans le groupe formé par l'éthylène, le propène, les butènes et les norbornènes. Ainsi ces polyoléfines peuvent-elles être formées par homopolymérisation ou copolymérisation d'au moins deux monomères.

Ces couches de compositions de polymères possédant une ou plusieurs fonctions réactives définies ci-dessus présentent généralement une épaisseur d'environ 1.10⁻⁶ m (1 micromètre) à 500.10⁻⁶ m (500 micromètres) et de préférence d'environ 100.10⁻⁶ m (100 micromètres) à 400.10⁻⁶ m (400 micromètres).

Une utilisation préférée des compositions de polymères contenant au moins un polymère thermoplastique et au moins une résine époxyde modifiée par au moins une polyamine aromatique pour le revêtement de surfaces externes des canalisations consiste à former la multicouche suivante. Au moins une première couche contenant au moins un polymère thermoplastique et au moins une résine époxyde modifiée par au moins une polyamine aromatique est déposée directement sur la canalisation - ou sur la canalisation après dépôt d'un primaire anti-corrosion et/ou d'un promoteur d'adhérence. Sur cette couche, on dépose une deuxième couche de polymère définie ci-devant, présentant une ou plusieurs fonctions réactives et possédant une bonne adhérence à la première couche. Sur ce système, on dépose finalement une couche de polymères commerciaux choisis dans le groupe des polyoléfines, telles que les polyéthylènes et les polypropylènes, et présentant une bonne compatibilité avec la deuxième couche : par exemple, sur une couche de polyéthylène modifié - possédant au moins une fonction réactive - on dépose une couche de polyéthylène commercial.

Cette dernière couche peut se présenter sous forme massique et/ou alvéolaire. En outre, elle présente généralement une épaisseur d'environ 10⁻³ m (1 millimètre) à environ 10.10⁻² m (10 centimètres).

Plus généralement, au moins une composition de polymères contenant au moins un polymère thermoplastique et au moins une résine époxyde modifiée par au moins une polyamine aromatique peut être utilisée comme couche intermédiaire entre une surface et une couche de composition de polymères thermoplastiques contenant au moins deux polymères distincts, dont au moins un polymère comportant au moins une fonction réactive, et au moins une polyoléfine modifiée contenant au moins un cycle succimide substitué sur l'azote par un groupement réactif, ledit cycle étant supporté soit par la chaîne principale, soit par la chaîne latérale.

Parmi les mises en oeuvre du dépôt de ces revêtements multicouches, un mode de mise en oeuvre préféré consiste à déposer une couche de composition de polymères contenant au moins un polymère thermoplastique et au moins une résine époxyde modifiée par au moins une polyamine aromatique sur un support à la température de mise en oeuvre de ladite composition de polymères, puis à déposer sur cette couche une autre couche de composition de polymères parmi celles définies ci-dessus à sa température de mise en oeuvre. Chaque dépôt de couche peut être suivi d'un recuit à une température d'environ 200 à 250 °C, pendant une durée d'environ 10 minutes à 12 heures. On peut aussi effectuer un recuit après avoir déposé la totalité des couches sur le revêtement. De préférence, on effectue un recuit après avoir déposé la totalité des couches, ce mode de réalisation permet ainsi d'obtenir une bonne réticulation des couches entre elles.

La présente invention concerne également les revêtements de surface comprenant au moins un polymère thermoplastique choisi de préférence dans le groupe formé par les polyétherimides, les polysulfones et les polyphénylèneéthers et au moins une résine époxyde modifiée par au moins une polyamine aromatique comportant dans sa molécule au moins 2 groupes amino primaires et contenant au moins un substituant alcanoyle ayant de 1 à 12 atomes de carbone situé en alpha de l'un des groupes amino, la résine époxyde étant formée à partir d'au moins un polyépoxyde contenant dans sa molécule au moins 2 groupes époxydes et le rapport molaire de la polyamine aromatique à l'époxyde étant tel que, à chaque groupe amino, il corresponde de 1,6 à 2,6 groupes époxydes, la teneur en polymère thermoplastique étant supérieure à 15 % et jusqu'à 98 % en masse par rapport à la masse totale de la composition de polymères et la teneur en résine époxyde modifiée par au moins une polyamine aromatique étant d'environ 2 à 85 % en masse par rapport à la masse totale de la composition de polymères.

Elle concerne encore les revêtements de surface multicouche comprenant au moins deux couches identiques ou différentes dans lesquels au moins une première couche contient au moins un polymère thermoplastique choisi de préférence dans le groupe formé par les polyétherimides, les polysulfones et les polyphénylèneéthers et au moins une résine époxyde modifiée par au moins une polyamine aromatique telle que définie ci-devant, et au moins une deuxième couche identique ou différente de ladite première couche, choisie de préférence dans le groupe formé par les polymères réactifs décrits ci-devant et les polyoléfines modifiées décrites ci-devant, ou un mélange de ces deux types de produits. Au sens de la présente description, pour des revêtements comprenant au moins deux couches, le terme première couche n'implique pas que cette couche est celle qui est directement en contact avec la surface à revêtir.

Les exemples suivants illustrent l'invention sans en limiter la portée.

Les compositions de polymères des exemples suivants sont préparées au moyen d'une extrudeuse bivis de la société CLEXTRAL, cette extrudeuse comprend plusieurs niveaux d'introduction des réactifs à mélanger. Pour ces exemples, on effectue au préalable le mélange de la résine époxyde et de la polyamine aromatique, ce mélange recevra dans la suite du texte l'appelation de "pré-mélange". On introduit les polymères thermoplastiques par une zone d'entrée et le pré-mélange par une autre zone d'entrée. Le débit de pré-mélange étant constant, on l'introduit au moyen d'une pompe à engrenage. Par contre, les polymères thermoplastiques sont introduits au moyen d'un doseur pondéral qui permet de faire varier le débit de polymères thermoplastiques et ainsi d'obtenir des compositions de polymères avec des rapports résines modifiées/polymères thermoplastiques différents.

Les polymères thermoplastiques sont introduits dans une zone d'entrée de l'extrudeuse située à l'extrémité opposée à la zone de récupération de la composition de polymères. Dans cette zone d'entrée, la température est de 100 °C. Ils sont ensuite entraînés dans une deuxième zone où la température est de 150 °C et dans laquelle on introduit le pré-mélange. Ces réactifs sont ensuite entraînés par l'extrudeuse double-vis, la température à l'intérieur de cette extrudeuse augmente progressivement pour atteindre 185 °C en sortie d'extrudeuse.

### EXEMPLE 1

Dans cet exemple, des mélanges de compositions de polymères comprenant un polyétherimide et une résine époxyde modifiée ont été préparés.

La résine époxyde modifiée comprend 8,016 kg de diglycidyléther du bis-phénol-A (DGEBA) commercialisée sous la référence LY556 par la société CIBA-GEIGY et 3,984 kg de 4,4'-méthylène-bis(3-chloro-2,6-diéthylaniline) (MCDEA) commercialisée par la société LONZA.

Avant son introduction dans l'extrudeuse, ce mélange est chauffé à 80 °C sous agitation. On a mesuré l'avancement de réaction de ce mélange par chromatographie d'exclusion de taille. La réactivité est très faible : 5 heures à 60 °C conduisent à un avancement de réaction de 1 %.

Le polyétherimide utilisé est commercialisé par la société General Electric Plastics sous la référence ULTEM 1000, sa masse moléculaire moyenne en nombre est de 26 000 g/mol et sa granulométrie est de 300 micromètres. Avant son introduction dans l'extrudeuse, le polyétherimide est maintenu à l'étuve à 120 °C pendant 2 heures.

La résine époxyde modifiée est introduite dans l'extrudeuse par une pompe à engrenage au débit constant de 2 kg/h. Le polyétherimide est introduit au moyen d'un doseur pondéral au débit de 4,75 kg/h pour obtenir une composition contenant 30 % en masse de résine époxyde modifiée puis au débit de 2,00 kg/h pour obtenir une composition contenant 50 % en masse de résine époxyde modifiée puis au débit de 1,30 kg/h pour obtenir une composition contenant 60 % en masse de résine époxyde modifiée, ces pourcentages en masse de résine époxyde modifiée sont calculés par rapport à la masse totale de la composition.

Après extrusion, afin d'effectuer des mesures d'adhérence par le test de rupture en traction-cisaillement, ces compositions ont été déposées sur acier à une température qui correspond à leur température de mise en oeuvre - ces températures sont consignées dans le tableau 1a - puis portées à recuit à 220 °C pendant une heure.

D'autre part, ces compositions ont été pressées en moule puis portées à recuit à 220 °C pendant une heure de manière à les façonner sous forme d'éprouvettes en vue de déterminer leurs propriétés thermomécaniques.

En vue de les utiliser pour le revêtement externe des pipelines, des mesures d'adhérence à l'acier, du comportement thermomécanique, de la tenue à l'eau de mer et du comportement en vieillissement des différentes compositions ont été effectuées.

Les propriétés d'adhérence des différentes compositions ont été déterminées par la méthode de rupture en traction-cisaillement (ASTM D1002). Pour déterminer l'adhérence, des éprouvettes en acier, préalablement décapées avec une brosse en acier inoxydable tournant à grande vitesse, sont collées. La surface de collage est de 25,4.10⁻³ m x 12,7.10⁻³ m et l'épaisseur du joint de colle est de 125 micromètres. Le collage est effectué par simple contact à une température qui correspond pour chaque composition à sa température de mise en oeuvre, puis elles sont portées à recuit pendant 1 heure à 220 °C. Ces tests d'adhérence par la méthode de rupture en traction-cisaillement ont été effectués avec un appareil commercialisé par la société INSTRON (INSTRON-1175), équipé d'une tête de mesure de 100 kN (kiloNewton), avec une vitesse de traverse de 10⁻³ m/min.

Les exemples 1.2, 1.3 et 1.4 du tableau 1a sont des compositions entrant dans le cadre de l'invention. L'exemple 1.1 est un exemple comparatif. La composition de cet exemple 1.1 ne comprend pas de résine époxyde modifiée, elle contient uniquement un polyétherimide ULTEM 1000. Sur ces différentes compositions, on a déterminé la température de mise en oeuvre puis la charge maximale, en rapportant cette dernière valeur à la surface de collage, on déduit la contrainte à la rupture en traction-cisaillement.

**TABLEAU 1a**

| Exemples | 1.1(comparatif) | 1.2( conforme) | 1.3( conforme) | 1.4( conforme) |
|---|---|---|---|---|
| Résine époxyde modifiée (% en masse par rapport à la composition totale) | 0 | 30 | 50 | 60 |
| Température de mise en oeuvre (°C) | 320 | 230 | 210 | 200 |
| Charge maximale (kiloNewton) | 6,1 | 6,5 | 6,8 | 7,4 |
| Contrainte à la rupture (MPa) | 19 | 20 | 21 | 23 |

De cette première série de résultats, on note que les compositions du cadre de la présente invention sont mises en oeuvre à une température inférieure à 250°C. Les contraintes à la rupture en traction-cisaillement de ces compositions sont très bonnes : elles sont toutes au moins égales à 20 MPa.

D'autre part, la perte d'adhérence après 6 mois à 150 °C sous air est faible. La valeur de contrainte à la rupture en traction-cisaillement mesurée sur la composition contenant 30% de résine époxyde modifiée passe alors de 20 MPa à 17 MPa.

Les propriétés thermomécaniques des compositions de polymères ont été déterminées par une analyse DMTA (dynamic mechanical thermal analysis) en simple encastrement. Pour effectuer les mesures, les différentes compositions ont été moulées sous forme de plaques de 2.10⁻³ m d'épaisseur sous une pression de 5 MPa, puis ces moulages ont été portés à 220 °C pendant 1 heure. Les valeurs du module d'élasticité et de la tangente à l'angle de perte sont mesurées en fonction de la température à une fréquence de 1 Hz au moyen d'un appareil DMTA de la société Polymer Laboratories.

Les températures de transition vitreuse (Tg) et les modules d'élasticité E' à 25 °C, à 150 °C et à 175 °C ont été mesurés sur les compositions définies dans le tableau 1a. Ces valeurs sont consignées dans le tableau 1b.

**TABLEAU 1b**

| Exemples | 1.1(comparatif) | 1.2( conforme) | 1.3( conforme) | 1.4( conforme) |
|---|---|---|---|---|
| Tg en °C | 220 | 218 | 215 | 215 |
| Module E' à 25°C en MPa | 1600 | 1600 | 1000 | 1250 |
| Module E' à 150°C en MPa | 1250 | 800 | 550 | 800 |
| Module E' à 175°C en MPa | 1200 | 600 | 350 | 300 |

Les modules d'élasticité traduisent la rigidité des matériaux. D'après ces résultats, ces compositions de polymères présentent jusqu'à 150 °C une rigidité comparable à celle du polyétherimide (exemple 1.1). A 175 °C, elles présentent encore une rigidité suffisante pour une application en revêtement.

Une série de tests de la tenue à l'eau de mer a aussi été effectuée. Les compositions des exemples 1.1, 1.3 et 1.4 ont été moulées sous forme de plaques de 50.10⁻³ m x 50.10⁻³ m x 2.10⁻³ m.
Ces échantillons ont été immergés dans de l'eau de mer synthétique contenue dans un réacteur étanche, chauffé à 160 °C, à une pression absolue de 0,62 MPa. Des mesures d'absorption de l'eau ont été réalisées en déterminant la variation de masse des échantillons après 3 mois d'immersion. Les résultats sont consignés dans le tableau 1c.

**TABLEAU 1c**

| Exemples | 1.1(comparatif) | 1.3( conforme) | 1.4( conforme) |
|---|---|---|---|
| Reprise d'eau (% en poids) | 4,4 | 3,6 | 3,2 |
| Déformation | importante | faible | aucune |

La reprise d'eau des compositions du cadre de l'invention est faible. L'augmentation de la quantité de résine époxyde modifiée diminue la reprise d'eau. D'autre part, ces compositions subissent une faible ou aucune déformation. Après 3 mois d'immersion, les éprouvettes présentent un revêtement presque complètement inaltéré.

### EXEMPLE 2

Dans cet exemple, des mélanges de compositions de polymères comprenant une polyphénylènesulfone et une résine époxyde modifiée ont été préparés.

La résine époxyde modifiée comprend 8,016 kg de diglycidyléther du bis-phénol-A (DGEBA), commercialisée sous la référence LY556 par la société CIBA-GEIGY et 3,984 kg de MCDEA, commercialisée par la société LONZA. Avant son introduction dans l'extrudeuse, ce mélange est chauffé à 80 °C sous agitation. On a mesuré l'avancement de réaction de ce mélange par chromatographie d'exclusion de taille. La réactivité est très faible : 5 heures à 60 °C conduisent à un avancement de réaction de 1 %.

La polyphénylènesulfone utilisée est le RADEL R, commercialisé par la société AMOCO.

La résine époxyde modifiée est introduite dans l'extrudeuse par une pompe à engrenage au débit constant de 2 kg/h. La polyphénylènesulfone est introduite au moyen d'un doseur pondéral au débit de 2,00 kg/h pour obtenir une composition contenant 50% en masse de résine époxyde modifiée puis au débit de 1,10 kg/h pour obtenir une composition contenant 65 % en masse de résine époxyde modifiée. Ces pourcentages en masse de résine époxyde modifiée sont calculés par rapport à la masse totale de la composition.

Après extrusion, afin d'effectuer des mesures d'adhérence par le test de rupture en traction-cisaillement, ces compositions ont été déposées sur acier à une température qui correspond à leur température de mise en oeuvre - ces températures sont consignées dans le tableau 2a -, puis portées à recuit à 220 °C pendant une heure. Pour déterminer leurs propriétés thermomécaniques, ces compositions ont été pressées en moule puis portées à recuit à 220 °C pendant une heure, de manière à les façonner sous forme d'éprouvettes.

Les propriétés d'adhérence des différentes compositions ont été déterminées par la méthode ASTM D1002 selon le même processus que dans l'exemple 1.

Les exemples 2.2 et 2.3 du tableau suivant entrent dans le cadre de l'invention, l'exemple 2.1 est un exemple comparatif dans lequel la composition ne comprend pas de résine époxyde modifiée, mais contient uniquement une polyphénylènesulfone de type RADEL R. Sur ces différentes compositions on a déterminé la température de mise en oeuvre puis la charge maximale, en rapportant cette dernière valeur à la surface de collage, on déduit la contrainte à la rupture en traction-cisaillement.

**TABLEAU 2a**

| Exemples | 2.1(comparatif) | 2.2( conforme) | 2.3( conforme) |
|---|---|---|---|
| Résine époxyde modifiée (% en masse par rapport à la composition totale) | 0 | 50 | 65 |
| Température de mise en oeuvre (°C) | 320 | 190 | 170 |
| Charge maximale (kiloNewton) | 6,5 | 6,1 | 6,8 |
| Contrainte à la rupture (MPa) | 20 | 19 | 21 |

De cette première série de résultats, on note que les compositions du cadre de la présente invention sont mises en oeuvre à une température inférieure à 200°C. Les contraintes à la rupture en traction-cisaillement de ces compositions sont très bonnes : elles sont toutes au moins égales à 19 MPa.

Les propriétés thermomécaniques de ces compositions de polymères ont été déterminées par une analyse DMTA en simple encastrement selon le même processus que dans l'exemple 1.

Les températures de transition vitreuse (Tg) et les modules d'élasticité E' à 25 °C, à 150 °C et à 175 °C ont été mesurés sur les compositions définies dans le tableau 2a. Ces valeurs sont consignées dans le tableau 2b.

**TABLEAU 2b**

| Exemples | 2.1(comparatif) | 2.2( conforme) | 2.3( conforme) |
|---|---|---|---|
| Tg en °C | 220 | 205 | 200 |
| Module E' à 25°C en MPa | 1200 | 1100 | 1300 |
| Module E' à 150°C en MPa | 1050 | 850 | 850 |
| Module E' à 175°C en MPa | 1000 | 700 | 650 |

Les modules d'élasticité traduisent la rigidité des matériaux. D'après ces résultats, même lorsqu'on les porte à une température assez élevée, ces compositions de polymères présentent une rigidité suffisante pour une application en revêtement.

Une série de tests de la tenue à l'eau de mer a aussi été effectuée. Les compositions des exemples 2.1 et 2.2 ont été moulées sous forme de plaques de 50.10⁻³ m x 50.10⁻³ m x 2.10⁻³ m. Ces échantillons ont été immergés dans de l'eau de mer synthétique contenue dans un réacteur étanche, chauffé à 160 °C à une pression absolue de 0,62 MPa. Des mesures d'absorption de l'eau ont été réalisées en déterminant la variation de masse des échantillons après 3 mois d'immersion.

**TABLEAU 2c**

| Exemples | 2.1(comparatif) | 2.2(conforme) |
|---|---|---|
| Reprise d'eau (% en poids) | 2,6 | 2 |
| Déformation | aucune | aucune |

La reprise d'eau de la composition du cadre de l'invention est faible. Cette composition ne subit pas déformation. Après 3 mois d'immersion, l'éprouvette présente un revêtement inaltéré.

### EXEMPLE 3

Dans cet exemple, une composition de polymères comprenant un polyphénylène-éther et une résine époxyde modifiée a été préparée.

La résine époxyde modifiée comprend 8,016 kg de diglycidyléther du bis-phénol-A (DGEBA), commercialisée sous la référence LY556 par la société CIBA-GEIGY et 3,984 kg de MCDEA commercialisée par la société LONZA.

Avant son introduction dans l'extrudeuse, ce mélange est chauffé à 80 °C sous agitation. On a mesuré l'avancement de réaction de ce mélange par chromatographie d'exclusion de taille. La réactivité est très faible : 5 heures à 60 °C conduisent à un avancement de réaction de 1 %.

Le polyphénylène-éther utilisé est commercialisé par la société General Electric Plastics sous la référence **PPE 800 ;** sa masse moléculaire moyenne en nombre est de 12 000 g/mol.

La résine époxyde modifiée est introduite dans l'extrudeuse par une pompe à engrenage au débit constant de 2 kg/h. Le polyphénylène-éther est introduit au moyen d'un doseur pondéral au débit de 3,00 kg/h pour obtenir une composition contenant 40 % en masse de résine époxyde modifiée. Le pourcentage en masse de résine époxyde modifiée est calculé par rapport à la masse totale de la composition.

Après extrusion, afin d'effectuer des mesures d'adhérence par le test de rupture en traction-cisaillement, cette composition a été déposée sur acier à une température qui correspond à sa température de mise en oeuvre - cette température est consignée dans le tableau 3a -, puis portées à recuit à 220 °C pendant une heure.

Pour déterminer ses propriété thermomécanique, cette composition a été pressée en moule puis portées à recuit à 220°C pendant une heure, de manière à la façonner sous forme d'éprouvette.

Les propriétés d'adhérence de cette composition ont été déterminées par la méthode ASTM D1002 selon le même processus que dans l'exemple 1.

L'exemple 3.2 du tableau suivant est conforme à l'invention. Sur la composition de l'exemple 3.2, on a déterminé la température de mise en oeuvre puis la charge maximale, en rapportant cette dernière valeur à la surface de collage, on déduit la contrainte à la rupture en traction-cisaillement.

L'exemple 3.1 est un exemple comparatif dans lequel la composition ne comprend pas de résine époxyde modifiée, mais contient uniquement un polyphénylène-éther de type PPE 800. Cependant les essais ont démontrés que, lorsque la température de mise en oeuvre atteint 300 °C, la composition se dégrade : elle s'oxyde spontannément au contact de l'oxygène de l'air et durcit. D'autre part, cette composition ne présente pas de propriétés adhérentes lorsqu'on la met en oeuvre à des températures inférieures à 300 °C. De ce fait, on n'a pas pu déterminer la charge maximale de cette composition.

**TABLEAU 3a**

| Exemples | 3.1(comparatif) | 3.2( conforme) |
|---|---|---|
| Résine époxyde modifiée (% en masse par rapport à la composition totale) | 0 | 40 |
| Température de mise en oeuvre (°C) | 300 | 220 |
| Charge maximale (KiloNewton) | 0 | 3,9 |
| Contrainte à la rupture MPa | 0 | 12 |

La composition 3.2 est mise en oeuvre à une température de 220 °C. La contrainte à la rupture en traction-cisaillement de cette composition est bonne : elle est de 12 MPa.

Bien que la composition 3.1 soit difficile à mettre en oeuvre à pression atmosphérique, à l'air ambiant, il a été possible de faire les éprouvettes nécessaires à la détermination des propriétés thermomécaniques de cette composition

Les propriétés thermomécaniques des compositions de polymères ont été déterminées par une analyse DMTA en simple encastrement selon le même processus que dans l'exemple 1.

Les températures de transition vitreuse (Tg) et les modules d'élasticité E' à 25 °C, à 150 °C et à 175 °C ont été mesurés sur les compositions définies dans le tableau 3a. Ces valeurs sont consignées dans le tableau 3b.

**TABLEAU 3b**

| Exemples | 3.1(comparatif) | 3.2( conforme) |
|---|---|---|
| Tg en °C | 210 | 205 |
| Module E' à 25°C en MPa | 1200 | 1400 |
| Module E' à 150°C en MPa | 850 | 850 |
| Module E' à 175°C en MPa | 750 | 650 |

Les modules d'élasticité traduisent la rigidité des matériaux. D'après ces résultats, même lorsqu'on les porte à une température assez élevée. Ces compositions de polymères du cadre de l'invention présentent une rigidité suffisante pour une application en revêtement.

Une série de tests de la tenue à l'eau de mer a aussi été effectuée. Les compositions des exemples 3.1 et 3.2 ont été moulées sous forme de plaques de 50.10⁻³ m x 50.10⁻³ m x 2.10⁻³ m. Ces échantillons ont été immergés dans de l'eau de mer synthétique contenue dans un réacteur étanche, chauffé à 160 °C à une pression absolue de 0,62 MPa. Des mesures d'absorption de l'eau ont été réalisées en déterminant la variation de masse des échantillons après 3 mois d'immersion.

**TABLEAU 3c**

| Exemples | 3.1(comparatif) | 3.2 (conforme) |
|---|---|---|
| Reprise d'eau (% en masse) | 0,5 | 1 |
| Déformation | aucune | aucune |

La reprise d'eau de la composition du cadre de l'invention est faible. Cette composition ne subit pas de déformation. Après 3 mois d'immersion, l'éprouvette présente un revêtement complètement inaltéré.

### EXEMPLE 4

Dans cet exemple, des mélanges de compositions de polymères comprenant une polyétherimide, un polyphénylène-éther et une résine époxyde modifiée ont été préparés.

La résine époxyde modifiée comprend 8,016 kg de diglycidyléther du bis-phénol-A (DGEBA), commercialisée sous la référence LY556 par la société CIBA-GEIGY et 3,984 kg de MCDEA, commercialisée par la société LONZA.

Avant son introduction dans l'extrudeuse, ce mélange est chauffé à 80 °C sous agitation. On a mesuré l'avancement de réaction de ce mélange par chromatographie d'exclusion de taille. La réactivité est très faible : 5 heures à 60 °C conduisent à un avancement de réaction de 1 %.

Le polyétherimide utilisé est commercialisé par la société General Electric Plastics sous la référence ULTEM 1000. Ce polyétherimide est celui utilisé dans l'exemple 1 du présent texte. Le polyphénylène-éther utilisé est commercialisé par la société General Electric Plastics sous la référence PPE 800. Sa masse moléculaire moyenne en nombre est de 12 000 g/mol. Ce polyphénylène-éther est celui utilisé dans l'exemple 3 du présent texte.

La résine époxyde modifiée est introduite dans l'extrudeuse par une pompe à engrenage au débit constant de 2 kg/h. Les polymères thermoplastiques (polyétherimide et polyphénylène-éther) sont introduits par la même zone d'introduction, la quantité de polyétherimide étant égale à la quantité de polyphénylène-éther. Ces deux polymères sont introduits au moyen d'un doseur pondéral au débit total de 2,00 kg/h, pour obtenir une composition contenant 50% en masse de résine époxyde modifiée, puis au débit de 1 kg/h, pour obtenir une composition contenant 67 % en masse de résine époxyde modifiée. Ces pourcentages en masse de résine époxyde modifiée sont calculés par rapport à la masse totale de la composition.

Après extrusion, afin d'effectuer des mesures d'adhérence par le test de rupture en traction-cisaillement, ces compositions ont été déposées sur acier à une température qui correspond à leur température de mise en oeuvre- ces températures sont consignées dans le tableau 4a -, puis portées à recuit à 220 °C pendant une heure.

Pour déterminer leurs propriétés thermomécaniques, ces compositions ont été pressées en moule puis portées à recuit à 220 °C pendant une heure, de manière à les façonner sous forme d'éprouvettes.

Les propriétés d'adhérence des différentes compositions ont été déterminées par la méthode ASTM D1002 selon le même processus que dans l'exemple 1.

Les exemples 4.2 et 4.3 du tableau suivant sont conformes à l'invention. L'exemple 4.1 est un exemple comparatif dans lequel la composition ne comprend pas de résine époxyde modifiée, mais contient 50 % en masse de polyphénylène-éther de type PPE 800 et 50 % en masse de polyétherimide de type ULTEM 1000. Sur ces différentes compositions, on a déterminé la température de mise en oeuvre, puis la charge maximale, en rapportant cette dernière valeur à la surface de collage, on déduit la contrainte à la rupture en traction-cisaillement.

**TABLEAU 4a**

| Exemples | 4.1(comparatif) | 4.2( conforme) | 4.3( conforme) |
|---|---|---|---|
| Résine époxyde modifiée (% en masse par rapport à la composition totale) | 0 | 50 | 67 |
| Température de mise en oeuvre (°C) | 300 | 220 | 160 |
| Charge maximale (kiloNewton) | 2,2 | 7,4 | 7,7 |
| Contrainte à la rupture (MPa) | 7 | 23 | 24 |

De cette première série de résultats, on note que les compositions du cadre de la présente invention sont mises en oeuvre à une température inférieure à 250 °C. Les contraintes à la rupture en traction-cisaillement de ces compositions sont très bonnes : elles sont toutes au moins égales à 23 MPa.

Les propriétés thermomécaniques des compositions de polymères ont été déterminées par une analyse DMTA en simple encastrement selon le même processus que dans l'exemple 1.

Les températures de transition vitreuse (Tg) et les modules d'élasticité E' à 25 °C, à 150 °C et à 175 °C ont été mesurés sur les compositions définies dans le tableau 4a. Ces valeurs sont consignées dans le tableau 4b.

**TABLEAU 4b**

| Exemples | 4.1(comparatif) | 4.2( conforme) | 4.3( conforme) |
|---|---|---|---|
| Tg en °C | 220 | 215 | 210 |
| Module E' à 25°C en MPa | 1100 | 1100 | 1100 |
| Module E' à 150°C en MPa | 1050 | 900 | 700 |
| Module E' à 175°C en MPa | 900 | 600 | 200 |

Les modules d'élasticité traduisent la rigidité des matériaux. D'après ces résultats, même lorsqu'on les porte à une température assez élevée, ces compositions de polymères présentent une rigidité suffisante pour une application en revêtement.

### EXEMPLE 5

Une série de tests de contraintes à la rupture sur des compositions muticouches a été réalisée. Sur une éprouvette en acier au carbone de type XC 12, on a ainsi déposé directement sur l'éprouvette une première couche d'une composition contenant un polymère thermoplastique et une résine époxyde modifiée; ensuite, sur cette couche, on a déposé une couche de polyéthylène greffé. Le polyéthylène greffé utilisé dans les exemples suivants contient 99 % de FINATHENE 3802® commercialisé par la société FINA et 1 % d'un mélange équimolaire d'acide 4-maléimido-benzoïque et d'ARALDITE GT 7071®, com-mercialisée par la société CIBA-GEIGY. La mise en oeuvre du dépôt de la première couche - d'épaisseur 100 micromètres - a été effectuée en portant cette première couche à sa température de mise en oeuvre et en maintenant cette température pendant une durée variant de quelques minutes à environ une heure - dans les tableaux suivants, cette variable reçoit l'appelation de "durée de cuisson de la première couche". On a ensuite déposé la deuxième couche - d'épaisseur 300 micromètres - à 220 °C, puis cette dernière température a été maintenue pendant une heure. Dans le cas décrit dans les exemples 5b et 5d, l'éprouvette est d'abord revêtue d'un primaire d'adhérence, puis sur ce primaire on dépose ensuite succesivement les deux couches décrites ci-devant.

### EXEMPLE 5a

Dans cet exemple, la première couche déposée directement sur l'éprouvette est formée à partir d'un mélange comprenant un polyétherimide et une résine époxyde modifiée. Les réactifs et le mode opératoire utilisés sont ceux décrits dans l'exemple 1 de la présente description, mais on fait varier la durée de cuisson de la première couche. Le polyétherimide représente en masse 60 % du mélange et la résine époxyde modifiée représente en masse 40 % du mélange.

**TABLEAU 5a**

| Exemples | 5a.1 | 5a.2 | 5a.3 |
|---|---|---|---|
| Durée de cuisson de la première couche (en minutes) | 10 | 30 | 60 |
| Charge maximale (kiloNewton) | 3,8 | 3,7 | 1,1 |
| Contrainte à la rupture (MPa) | 12 | 12 | 3,5 |

Au vu de ces résultats, on constate qu'il est nécessaire de ne pas avoir polymérisé trop largement les couches de polymères si on veut obtenir une bonne adhérence entre ces couches.

### EXEMPLE 5b

Cet exemple a été effectué selon la même procédure que l'exemple 5a, la durée de cuisson de la première couche étant de 10 minutes. La seule différence est que l'acier sur lequel ont été déposées les couches a été préalablement revêtu d'une couche mince - d'épaisseur 50 micromètres - d'un primaire époxy formé à partir de 2 moles de DGEBA pour 1 mole de MCDEA, puis prépolymérisé à 150 °C et c'est sur ce primaire que l'on dépose les couches comme décrit ci-devant dans l'exemple 5a. Le test de traction a permis de déterminer une contrainte à la rupture de 12 MPa.

### EXEMPLE 5c

Dans cet exemple, la première couche déposée directement sur l'éprouvette est formée à partir d'un mélange comprenant une polyéthersulfone de type RADEL A et une résine époxyde modifiée. Les réactifs pour l'obtention de la résine époxyde modifiée et le mode opératoire utilisés sont ceux décrits dans l'exemple 2 de la présente description. La polyéthersulfone représente en masse 60 % du mélange et la résine époxyde modifiée représente en masse 40 % du mélange.

**TABLEAU 5c**

| Exemples | 5c.1 | 5c.2 | 5c.3 |
|---|---|---|---|
| Durée de cuisson de la première couche (en minutes) | 10 | 30 | 60 |
| Charge maximale (kiloNewton) | 3,7 | 3,2 | 1,6 |
| Contrainte à la rupture (MPa) | 11,6 | 10 | 5 |

### EXEMPLE 5d

Cet exemple a été effectué selon la même procédure que l'exemple 5c, la durée de cuisson de la première couche étant de 10 minutes. La seule différence est que l'acier sur lequel ont été déposées les couches a été préalablement revêtu d'une couche mince (d'épaisseur 50 micromètres) d'un primaire époxy formé à partir de 2 moles de DGEBA pour 1 mole de MCDEA, puis prépolymérisé à 150 °C et c'est sur ce primaire que l'on dépose les couches comme décrit ci-devant dans l'exemple 5c Le test de traction a permis de déterminer une contrainte à la rupture de 12 MPa.

Les tests de traction effectués sur les éprouvettes en aciers revêtues décrites dans les exemples 5a à 5d ont permis de mettre en évidence que la rupture est du type cohésif, c'est-à-dire que celle-ci ne s'effectue pas entre les couches mais dans la couche de polyéthylène greffé. Ceci met en évidence la bonne cohésion de la composition contenant un polymère thermoplastique et une résine époxyde modifiée à l'acier, ainsi que la bonne cohésion des couches entre elles. Ces tests ont été effectués en suivant la méthode décrite dans l'exemple 1.

## Revendications

1. Utilisation pour le revêtement de surfaces d'une composition de polymères comprenant au moins un polymère thermoplastique choisi dans le groupe formé par les polyétherimides, les polysulfones et les polyphénylène-éthers et au moins une résine époxyde modifiée par au moins une polyamine aromatique comportant dans sa molécule au moins 2 groupes amino primaires et contenant au moins un substituant alcanoyle ayant de 1 à 12 atomes de carbone situé en alpha de l'un des groupes amino, la résine époxyde étant formée à partir d'au moins un polyépoxyde contenant dans sa molécule au moins 2 groupes époxydes et le rapport molaire de la polyamine aromatique à l'époxyde étant tel que, à chaque groupe amino, il corresponde de 1,6 à 2,6 groupes époxydes, la teneur en polymère thermoplastique étant supérieure à 15 % et jusqu'à 98 % en masse par rapport à la masse totale de la composition de polymères et la teneur en résine époxyde modifiée par au moins une polyamine aromatique étant 2 à 85 % en masse par rapport à la masse totale de la composition de polymères.

2. Utilisation d'une composition de polymères selon la revendication 1 comprenant au moins une polyamine aromatique comportant dans sa molécule au moins 2 groupes amino primaires et au moins un substituant alcanoyle ayant de 1 à 12 atomes de carbone situé en alpha de l'un des groupes amino.

3. Utilisation d'une composition de polymères selon l'une des revendications 1 et 2 dans laquelle la polyamine aromatique utilisée est choisie dans le groupe formé par les amines aromatiques comportant un seul noyau aromatique et les amines aromatiques comportant au moins deux noyaux aromatiques, les deux noyaux aromatiques étant reliés l'un à l'autre par un reste hydrocarboné bivalent linéaire ou ramifié comportant de 1 à 18 atomes de carbone.

4. Utilisation d'une composition de polymères selon l'une des revendications 1 à 3 **caractérisée en ce qu'**elle comprend en outre au moins un polysulfure de phénylène en une teneur 1 à 50 % en masse par rapport à la masse totale des polymères thermoplastiques.

5. Utilisation d'une composition de polymères selon l'une des revendications 1 à 4 **caractérisée en ce qu'**elle comprend en outre au moins une polyéthercétone aromatique en une teneur 1 à 50 % en masse par rapport à la masse totale des polymères thermoplastiques.

6. Utilisation d'une composition de polymères selon l'une des revendications 1 à 5 **caractérisée en ce qu'**elle comprend en outre au moins un additif choisi dans le groupe formé par les catalyseurs actifs dans la réaction entre les résines époxydes et les polyamines aromatiques encombrées, les antioxydants, les pigments, les promoteurs d'adhérence, les stabilisateurs à la chaleur, les charges organiques, minérales ou métalliques.

7. Utilisation d'au moins une composition de polymères selon l'une des revendications 1 à 6 comme couche intermédiaire entre la surface et une couche contenant au moins un polymère.

8. Utilisation d'au moins une composition de polymères selon la revendication 7 dans laquelle la couche contenant au moins un polymère est une couche formée d'une composition de polymères comprenant au moins un polymère thermoplastique choisi dans le groupe formé par les polyétherimides, les polysulfones et les polyphénylène-éthers et au moins une résine époxyde modifiée par au moins une polyamine aromatique.

9. Utilisation d'au moins une composition de polymères selon la revendication 7 comme couche intermédiaire entre la surface et une couche de composition de polymères thermoplastiques contenant au moins deux polymères distincts dont au moins un polymère comportant au moins une fonction réactive, et au moins une polyoléfine modifiée contenant au moins un cycle succimide substitué sur l'azote par un groupement réactif, ledit cycle étant supporté soit par la chaîne principale, soit par la chaîne latérale.

10. Utilisation d'une composition de polymères selon l'une des revendications 1 à 9 pour le revêtement de surfaces **caractérisée en ce que** la préparation de ladite composition est effectuée à partir d'au moins un polymère thermoplastique et d'au moins une résine époxyde modifiée par au moins une polyamine aromatique, sans solvant, à l'état fondu à une température d'environ 100 à 250 °C.

11. Utilisation d'une composition de polymères selon l'une des revendications 1 à 10 pour le revêtement externe des canalisations.

12. Utilisation d'une composition de polymères selon l'une des revendications 1 à 10 pour le revêtement interne des canalisations.

13. Revêtement de surface comprenant au moins une couche contenant au moins un polymère thermoplastique et au moins une résine époxyde modifiée par au moins une polyamine aromatique comportant dans sa molécule au moins 2 groupes amino primaires et contenant au moins un substituant alcanoyle ayant de 1 à 12 atomes de carbone situé en alpha de l'un des groupes amino, la résine époxyde étant formée à partir d'au moins un polyépoxyde contenant dans sa molécule au moins 2 groupes époxydes et le rapport molaire de la polyamine aromatique à l'époxyde étant tel que, à chaque groupe amino, il corresponde de 1,6 à 2,6 groupes époxydes, la teneur en polymère thermoplastique étant supérieure à 15 % et jusqu'à 98 % en masse par rapport à la masse totale de la composition de polymères et la teneur en résine époxyde modifiée par au moins une polyamine aromatique étant 2 à 85 % en masse par rapport à la masse totale de la composition de polymères.

14. Revêtement de surface selon la revendication 13 comprenant au moins deux couches identiques ou différentes comprenant au moins un polymère.

15. Revêtement de surface selon la revendication 14 dans lesquels au moins une couche comprend au moins un polymère choisi dans le groupe formé par les polymères réactifs.

16. Revêtement de surface selon la revendication 14 ou 15 dans lesquels au moins une couche comprend au moins un polymère choisi dans le groupe formé par au moins une polyolèfine modifiée.

## Patentansprüche

1. Verwendung, zur Oberflächenbeschichtung, einer Polymerzusammensetzung, umfassend zumindest ein thermoplastisches Polymer, ausgewählt aus der Gruppe gebildet aus den Polyetherimiden, den Polysulfonen und den Polyphenylenethem, und zumindest ein Epoxidharz, modifiziert durch zumindest ein aromatisches Polyamin, enthaltend innerhalb seines Moleküls zumindest zwei primäre Aminogruppen und enthaltend zumindest einen Alkanoylsubstituenten aufweisend 1 bis 12 Kohlenstoffatome in α-Stellung bezüglich einer der Aminogruppen, wobei das Epoxidharz gebildet wird aus zumindest einem Polyepoxid, enthaltend innerhalb seines Moleküls zumindest zwei Epoxidgruppen, und wobei das molare Verhältnis des aromatischen Polyamins zum Epoxid derart ist, dass es bezüglich jeder Aminogruppe 1,6 bis 2,6 Epoxidgruppen entspricht, wobei der Gehalt an thermoplastischem Polymer mehr als 15% und bis zu 98% in Gewicht in Bezug auf das Gesamtgewicht der Polymerzusammensetzung beträgt und wobei der Gehalt an durch zumindest ein aromatisches Polyamin modifiziertem Epoxidharz 2 bis 85% in Gewicht in Bezug auf das Gesamtgewicht der Polymerzusammensetzung beträgt.

2. Verwendung einer Polymerzusammensetzung gemäß Anspruch 1 umfassend zumindest ein aromatisches Polyamin, enthaltend innerhalb seines Moleküls zumindest zwei primäre Aminogruppen und zumindest einen Alkanoylsubstituenten aufweisend 1 bis 12 Kohlenstoffatome in α-Stellung bezüglich einer der Aminogruppen.

3. Verwendung einer Polymerzusammensetzung gemäß einem der Ansprüche 1 und 2, in der das verwendete aromatische Polyamin ausgewählt ist aus der Gruppe gebildet aus den aromatischen Aminen enthaltend einen einzigen aromatischen Ring und den aromatischen Aminen enthaltend zumindest zwei aromatische Ringe, wobei die beiden aromatischen Ringe über einen linearen oder verzweigten bivalenten Kohlenwasserstoffrest, umfassend 1 bis 18 Kohlenstoffatome, miteinander verbunden sind.

4. Verwendung einer Polymerzusammensetzung gemäß einem der Ansprüche 1 bis 3, **dadurch gekennzeichnet, dass** sie außerdem zumindest ein Polyphenylensulfid in einem Gehalt von 1 bis 50% in Gewicht in Bezug auf das Gesamtgewicht der thermoplastischen Polymere enthält.

5. Verwendung einer Polymerzusammensetzung gemäß einem der Ansprüche 1 bis 4, **dadurch gekennzeichnet, dass** sie außerdem zumindest ein aromatisches Polyetherketon in einem Gehalt von 1 bis 50% in Gewicht in Bezug auf das Gesamtgewicht der thermoplastischen Polymere enthält.

6. Verwendung einer Polymerzusammensetzung gemäß einem der Ansprüche 1 bis 5, **dadurch gekennzeichnet, dass** sie außerdem zumindest umfasst ein Additiv, ausgewählt aus der Gruppe gebildet aus den in der Reaktion zwischen den Epoxidharzen und den sterisch anspruchsvollen aromatischen Polyaminen aktiven Katalysatoren, den Antioxidantien, den Pigmenten, den Adhärenz-Promotern, den Wärmestabilisatoren, den organischen, mineralischen oder metallischen Chargen.

7. Verwendung von zumindest einer Polymerzusammensetzung gemäß einem der Ansprüche 1 bis 6 als Zwischenschicht zwischen der Oberfläche und einer Schicht enthaltend zumindest ein Polymer.

8. Verwendung von zumindest einer Polymerzusammensetzung gemäß Anspruch 7, in der die Schicht enthaltend zumindest ein Polymer eine Schicht, gebildet aus einer Polymerzusammensetzung, umfassend zumindest ein thermoplastisches Polymer, ausgewählt aus der Gruppe gebildet aus den Polyetherimiden, den Polysulfonen und den Polyphenylenethem, und zumindest ein durch zumindest ein aromatisches Polyamin modifiziertes Epoxidharz, ist.

9. Verwendung von zumindest einer Polymerzusammensetzung gemäß Anspruch 7 als Zwischenschicht zwischen der Oberfläche und einer Schicht einer Zusammensetzung thermoplastischer Polymere enthaltend zumindest zwei unterschiedliche Polymere, davon zumindest ein Polymer enthaltend zumindest eine reaktive Gruppe, und zumindest ein modifiziertes Polyolefin enthaltend zumindest einen am Stickstoff durch eine reaktive Gruppe substituierten Succinimid-Ring, wobei der Ring entweder von der Hauptkette oder von der Seitenkette getragen wird.

10. Verwendung einer Polymerzusammensetzung gemäß einem der Ansprüche 1 bis 9 zur Oberflächenbeschichtung, **dadurch gekennzeichnet, dass** die Herstellung der Zusammensetzung aus zumindest einem thermoplastischen Polymer und zumindest einem durch zumindest ein aromatisches Polyamin modifizierten Epoxidharz, ohne Lösungsmittel, in geschmolzenem Zustand bei einer Temperatur von ungefähr 100 bis 250 °C durchgeführt wird.

11. Verwendung einer Polymerzusammensetzung gemäß einem der Ansprüche 1 bis 10 zur extemen Beschichtung von Rohrleitungen.

12. Verwendung einer Polymerzusammensetzung gemäß einem der Ansprüche 1 bis 10 zur internen Beschichtung von Rohrleitungen.

13. Oberflächenbeschichtung, umfassend zumindest eine Schicht enthaltend zumindest ein thermoplastisches Polymer und zumindest ein durch zumindest ein aromatisches Polyamin modifiziertes Epoxidharz enthaltend innerhalb seines Moleküls zumindest zwei primäre Aminogruppen und enthaltend zumindest einen Alkanoylsubstituenten, aufweisend 1 bis 12 Kohlenstoffatome, in α-Stellung bezüglich einer der Aminogruppen, wobei das Epoxidharz gebildet wird aus zumindest einem Polyepoxid, enthaltend innerhalb seines Moleküls zumindest zwei Epoxidgruppen, und wobei das molare Verhältnis des aromatischen Polyamins zum Epoxid derart ist, dass es bezüglich jeder Aminogruppe 1,6 bis 2,6 Epoxidgruppen entspricht, wobei der Gehalt an thermoplastischem Polymer mehr als 15% und bis zu 98% in Gewicht in Bezug auf das Gesamtgewicht der Polymerzusammensetzung beträgt, und wobei der Gehalt an durch zumindest ein aromatisches Polyamin modifiziertem Epoxidharz 2 bis 85% in Gewicht in Bezug auf das Gesamtgewicht der Polymerzusammensetzung beträgt.

14. Oberflächenbeschichtung gemäß Anspruch 13 umfassend zumindest zwei identische oder unterschiedliche Schichten umfassend zumindest ein Polymer.

15. Oberflächenbeschichtung gemäß Anspruch 14, in denen zumindest eine Schicht zumindest ein Polymer, ausgewählt aus der Gruppe gebildet aus den reaktiven Polymeren, umfasst.

16. Oberflächenbeschichtung gemäß Anspruch 14 oder 15, in denen zumindest eine Schicht zumindest ein Polymer, ausgewählt aus der Gruppe gebildet aus zumindest einem modifizierten Polyolefin, umfasst.

## Claims

1. Use for coating surfaces of a polymer composition comprising at least one thermoplastic polymer selected from the group formed by polyetherimides, polysulphones and polyphenylene ethers and at least one epoxy resin modified by at least one aromatic polyamine containing at least two primary amine groups in its molecule and containing at least one alkyl substituent containing from 1 to 12 carbon atoms located alpha to one of the amine groups, the epoxy resin being formed from at least one polyepoxide containing at least two epoxy groups in its molecule and the molar ratio of the aromatic polyamine to the epoxy being such that each amine group corresponds to 1.6 to 2.6 epoxy groups, the amount of thermoplastic polymer being greater than 15% up to 98% by weight with respect to the total weight of the polymer composition and the amount of epoxy resin modified by at least one aromatic polyamine being of form 2 to 85% by weight with respect to the total weight of the polymer composition.

2. Use of a polymer composition according to claim 1, comprising at least one aromatic polyamine containing at least two primary amine groups in its molecule and at least one alkyl substituent containing 1 to 12 carbon atoms located alpha to one of the amine groups.

3. Use of a polymer composition according to any one of claims 1 and 2, in which the aromatic polyamine used is selected from the group formed by aromatic amines containing a single aromatic ring and aromatic amines containing at least two aromatic rings, the two aromatic rings being connected to each other by a bivalent linear or branched hydrocarbon residue containing 1 to 18 carbon atoms.

4. Use of a polymer composition according to any one of claims 1 to 3, **characterized in that** it further comprises at least one polyphenylene sulphide in an amount of 1% to 50% by weight with respect to the total weight of thermoplastic polymers.

5. Use of a polymer composition according to any one of claims 1 to 4 **characterized in that** it further comprises at least one aromatic polyetherketone in an amount of 1% to 50% by weight with respect to the total weight of thermoplastic polymers.

6. Use of a polymer composition according to any one of claims 1 to 5 **characterized in that** it further comprises at least one additive selected from the group formed by catalysts which are active in the reaction between epoxy resins and sterically hindered aromatic polyamines, anti-oxidants, pigments, adhesion promoters, heat stabilisers, and organic, mineral or metallic fillers.

7. Use of at least one polymer composition according to any one of claims 1 to 6 as an intermediate layer between the surface and a layer containing at least one polymer.

8. Use of at least one polymer composition according to claim 7 in which the layer containing at least one polymer is a layer formed from a polymer composition comprising at least one thermoplastic polymer selected from the group formed by polyetherimides, polysulphones and polyphenylene ethers and at least one epoxy resin modified by at least one aromatic polyamine.

9. Use of at least one polymer composition according to claim 7 as an intermediate layer between the surface and a layer of a thermoplastic polymer composition containing at least two distinct polymers one polymer of which comprises at least one reactive function, and at least one modified polyolefin containing at least one succimide ring substituted at the nitrogen by a reactive group, said ring being supported either by the main chain or by the side chain.

10. Use of a polymer composition according to any one of claims 1 to 9 for coating surfaces, **characterized in that** said composition is prepared from at least one thermoplastic polymer and at least one epoxy resin modified by at least one aromatic polyamine, without a solvent, in the molten state at a temperature of about 100°C to 250°C.

11. Use of a polymer composition according to any one of claims 1 to 10 as an external coating for conduits.

12. Use of a polymer composition according to any one of claims 1 to 10 as an internal coating for conduits.

13. A surface coating comprising at least one layer containing at least one thermoplastic polymer and at least one epoxy resin modified by at least one aromatic polyamine containing at least two primary amine groups in its molecule and containing at least one alkyl substituent containing from 1 to 12 carbon atoms located alpha to one of the amine groups, the epoxy resin being formed from at least one polyepoxy compound containing at least two epoxy groups in its molecule, the molar ratio of the aromatic polyamine to the epoxy being such that each amine group corresponds to 1.6 to 2.6 epoxy groups, the amount of thermoplastic polymer being greater than 15% up to 98% by weight with respect to the total weight of the polymer composition and the amount of epoxy resin modified by at least one aromatic polyamine being of form 2 to 85% by weight with respect to the total weight of the polymer composition.

14. A surface coating according to claim 13, comprising at least two identical or different layers comprising at least one polymer.

15. A surface coating according to claim 14, in which at least one layer comprises at least one polymer selected from the group formed by reactive polymers.

16. A surface coating according to claim 14 or claim 15, in which at least one layer comprises at least one polymer selected from the group formed by at least one modified polyolefin.
